# FASCICULE DE BREVET EUROPEEN

(11) **EP 0 850 568 B1**
(45) Date de publication et mention de la délivrance du brevet: **24.10.2001**
(21) Numéro de dépôt: 96203706.5
(22) Date de dépôt: 24.12.1996
(51) Int. Cl.: A23C 9/123, A23C 11/10

(54) **Procédé de fermentation en continu de lait**
Verfahren zur kontinuierlichen Milchansäuerung
Process for continuous milk fermentation

(43) Date de publication de la demande: 01.07.1998
(73) Titulaire: SOCIETE DES PRODUITS NESTLE S.A., 1800 Vevey (CH)
(72) Inventeur: Eyer, Kurt, 3600 Thun (CH); Aebischer, Jürg, 3097 Liebefeld (CH); Neumann, Fred, 3612 Steffisburg (CH); Illi, Hans, Pattaya 20260 (TH)

(56) Documents cités:
- CA-A- 472 501
- US-A- 3 924 007
- PROCESS BIOCHEMISTRY, vol. 11, no. 5, 1976, pages 39-40, XP002031924 H. LELIEVELD: "Continuous fermentation in yoghurt manufacture"
- BIOTECHNOLOGY AND BIOENGINEERING, vol. XIX, 1977, pages 841-851, XP002031925 F. DRIESSEN: "Continuous manufacture of yoghurt"
- DEUTSCHE MILCHWIRTSCHAFT, vol. 29, 1980, pages 1199-1202, XP000646537 L. VAN DER LOO: "Kontinuierliche Zubereitung von Rührjoghurt in industriellem Ausmass"

## Description

La présente invention a pour objet un procédé de préparation en continue d'un lait fermenté par une bactérie lactique.

### Etat de la technique

La fermentation continue d'un lait par des bactéries lactiques nécessite un brassage du lait de manière à ce que l'on puisse, dans la cuve de fermentation, ajouter du lait non-fermenté et soutirer du lait fermenté. Lorsque le pH d'un tel lait brassé atteint un pH de 4,8-5,2, les micelles de caséine du lait tendent à s'agglomérer et à se concentrer jusqu'à coaguler irréversiblement. Ce phénomène de coagulation, appelé "synérèse", détruit malheureusement la consistance du lait fermenté (Veisseyre, Technologie du Lait, Ed. La Maison Rustique, Paris, 1975, I.S.B.N. 2-7066-0018-7, pages 427-438).

Pour pallier cet inconvénient, on peut concevoir de préparer un lait fermenté d'une manière semi-continue, en préparant premièrement en continu une pré-culture de bactéries lactiques ayant un pH supérieur à 5 de sorte à éviter l'apparition d'une synérèse complète, puis deuxièmement en inoculant un lait avec cette pré-culture et en le fermentant par batch sans brassage jusqu'à un pH d'environ 4,5, par exemple.

La préparation en continue d'une pré-culture de bactéries lactiques, ainsi que l'utilisation de cette pré-culture dans la cadre de la fabrication semi-continue d'un lait fermenté, est bien connue. A titre d'exemples, on peut citer les procédés décrits par Driessen et al. (Biotechnology and Bioengineering, 29, 821-839, 1977), par Lelieved et al. (Bioengineering, 11, 39-40, 1976), par Lelieved (Process Biochemistry, 19, 112-113, 1984), par MacBean et al. (Biotechnology and Bioengineering, 21, 1517-1531, 1979), par Prevost et al. (Milchwissenschaft, 43, 621-625, 1988), par Reichart (Acta Alimentaria, 8, 373-381, 1979), par Schuler (DE2006894), et par Spreer et al. (Lebensmittel-biotechnologie, 7, 28-31, 1991), par exemple.

Au cours d'un procédé en continu de préparation d'un lait fermenté, il est également possible d'empêcher partiellement la formation complète d'une synérèse.

A cet effet, US-A-3924007 décrit un procédé continu dans lequel, premièrement on prépare en continu une pré-culture de bactéries lactique ayant un pH supérieur à 5 de manière à éviter la synérèse du lait, puis deuxièmement on fermente en continu cette pré-culture en la brassant d'une manière telle qu'un gradient de brassage s'instaure dans le lait fermenté ce qui évite l'apparition d'une synérèse complète du lait.

Un tel gradient de brassage à également été utilisé par Van der Loo dans le cadre de la préparation en continu d'un lait fermenté (Deutsche Milchwirtschaft, 29, 1199-1202, 1980). Dans ce procédé, on ajoute en haut d'une cuve de fermentation du lait et une pré-culture de bactéries lactique à pH 5,7, on soumet le lait fermenté dans la cuve à un gradient de brassage, et on soutire le lait fermenté du bas de la cuve.

On connait également, de AU-A-472501, un procédé de fermentation en continu de lait en deux étapes, sans brassage dans le deuxième fermenteur pour la fabrication de serré dont l'objectif, fort différent, est de provoquer la synérèse. Dans ce procédé, le lait est coagulé à pH 4,6 et le petit-lait est séparé par centrifugation.

Malheureusement, ces procédés continus de préparation d'un lait fermenté ne sont pas totalement satisfaisants. En-effet, les laits issus d'une fermentation en continue ne présentent jamais un pH inférieur à 4,7, sous peine de renforcer la synérèse du lait. Dans certains cas ces laits fermentés sont aussi soumis à des force de cisaillement tels que la consistance du lait s'en trouve profondément modifié.

La présente invention vise à pallier les inconvénients de l'art antérieur, en fournissant un procédé qui peut être facilement mis en oeuvre.

### Résumé de l'invention

A cet effet, l'invention concerne un procédé de préparation en continue d'un lait fermenté dans lequel:
- on prépare dans un premier dispositif un lait fermenté par des bactéries lactiques, ledit lait fermenté étant soumis à des conditions de brassage et de pH telles que la synérèse du lait n'a pas lieu, et ledit pH étant réglé par adjonction continu de lait non-fermenté dans le premier dispositif et soutirage continu de lait fermenté du premier dispositif;
- dans un deuxième dispositif de post-acidification, on refroidit le lait fermenté soutiré du premier dispositif, à une température inférieure à 15°C de sorte à soumettre le lait fermenté à une post-acidification, le temps de résidence du lait fermenté dans le deuxième dispositif étant ajusté de façon à ce qu'à la sortie de celui-ci le pH du lait fermenté soit inférieur à pH4,7;
- on soutire en continu du deuxième dispositif un lait fermenté ayant un pH inférieur à pH4,7.

### Description détaillée de l'invention

Par lait, on entend désigner, d'une part, un lait d'origine animal, tel que les laits de vache, de chèvre, de brebis, de buflesse, de zébue, de jument, d'ânesse, de chamelle, etc. Ce lait peut être un lait à l'état natif, un lait reconstitué, un lait écrémé, ou un lait additionné de composés nécessaires à la croissance des bactéries ou au traitement subséquent du lait fermenté, comme des matières grasses, de l'extrait de levure, de la peptone et/ou un surfactant, par exemple.

Le terme lait s'applique également à ce que l'on appelle communément un lait végétal, c'est à dire un extrait de matières végétales traités ou non, telles que les légumineuses (soja, pois chiche, lentille, ect...) ou des oléagineuses (colza, soja, sésame, coton, ect...), extrait qui contient des protéines en solution ou en suspension colloïdale, coagulables par action chimique, par fermentation acide et/ou par la chaleur. Ces laits végétaux ont pu subir des traitements thermiques analogues à ceux des laits animaux. Ils ont pu subir également des traitements qui leur sont propres, tels que la décoloration, la désodorisation, et des traitements pour la suppression de goût indésirables. Enfin, le mot lait désigne aussi des mélanges de laits animaux et de laits végétaux.

Ce lait doit être pasteurisé, c'est à dire doit avoir un subi un traitement thermique et/ou par haute pression qui a inactivé tous les germes vivants. Ces techniques sont bien connues de l'homme du métier.

Ce lait peut être fermenté par au moins une souche de bactérie lactique, notamment par les bifidobactéries comme *Bifidobacterium infantis*, les lactocoques comme *Lactococcus lactis* subsp. *lactis, Lactococcus lactis* subsp. *cremoris*, *Lactococcus lactis* subsp. *lactic biovar diacetylactis*, les streptocoques comme *Streptococcus thermophilus*, *Streptococcus faecalis*, les lactobacilles comme *Lactobacillus delbrueckii* subsp. *bulgaricus*, *Lactobacillus acidophilus, Lactobacillus johnsonii*, *Lactobacillus gasseri, Lactobacillus amylovorus*, *Lactobacillus helveticus*, *Lactobacillus farciminis, Lactobacillus alimentarius, Lactobacillus casei* subsp. *casei, Lactobacillus delbruckii* subsp. *lactis*, *Lactobacillus sake*, *Lactobacillus curvatus*, les pediocoques comme *Pediococcus pentosaceus*, *Pediococcus acidilactici*, *Pediococcus halophilus*, les staphylocoques comme *Staphylococcus xylosus*, *Staphylococcus carnosus*, les microcoques comme *Micrococcus varians*, par exemple.

L'invention est particulièrement indiquée pour les microorganismes qui sont sensibles aux conditions de culture, notamment ceux qui sont sensibles à la présence d'air, par exemple. Parmi les microorganismes particulièrement sensibles, on peut compter les bactéries lactiques probiotiques, comme la souche *Lactobacillus acidophilus* CNCM I-1225 décrite dans EP577904 (reclassifiée *L. johnsonii*), c'est à dire les bactéries lactiques qui sont capables d'adhérer aux cellules intestinales humaines, d'exclure des bactéries pathogènes sur des cellules intestinales humaines, et d'augmenter la propriété du corps humain à se défendre contre les pathogènes, par exemple en augmentant les capacités de phagocytose des granulocytes issus du sang humain (J. of Dairy Science, 78, 491-197, 1995: capacité d'immunomodulation de la souche La-1 qui a été déposée à l'Institut Pasteur sous le numéro CNCM I-1225).

Par le mot "continu", on entend la production continuelle d'un lait fermenté, les différents flux de matières impliqués dans le procédé selon l'invention pouvant être contrôlés par des vannes fonctionnant aussi comme des pompes, lesdites vannes étant reliées à des sondes et à des calculateurs réglant l'ouverture des vannes, l'ouverture des vannes pouvant être aussi temporairement fermée.

Pour mettre en oeuvre la présente invention, dans une première étape, on prépare en continu un premier lait fermenté par des bactéries lactiques, à une température adaptée à la croissance des espèces bactériennes choisies, ledit lait fermenté étant soumis à des conditions de brassage et de pH tels que la synérèse du lait n'a pas lieu, et ledit pH étant réglé à un niveau défini par adjonction continue de lait pasteurisé et soutirage continue de lait fermenté. Ces opérations peuvent être réalisées dans tous dispositifs adaptés à la culture brassée de bactéries lactiques, mais en particulier dans une cuve chauffée ayant un système mélangeant le milieu fermenté, et ayant au moins une entrée pour le lait pasteurisé (non-fermenté) et une sortie pour le lait fermenté, le pH étant réglé par adjonction continue de lait pasteurisé et soutirage continu de lait fermenté au moyens de sondes analysant le pH et le volume, et de vannes à l'entrée et à la sortie de la cuve, l'ouverture des vannes pouvant être contrôlée par un calculateur relié aux sondes, par exemple. Il est dans les compétence de l'homme du métier de mettre au point un tel dispositif. Ce dispositif peut très bien être adapté de ceux décrits par Driessen et al. (Biotechnology and Bioengineering, 29, 821-839, 1977), par Lelieved et al. (Bioengineering, 11, 39-40, 1976), par Lelieved (Process Biochemistry, 19, 112-113, 1984), par MacBean et al. (Biotechnology and Bioengineering, 21, 1517-1531, 1979), par Prevost et al. (Milchwissenschaft, 43, 622-719, 1988), par Reichart (Acta Alimentaria, 8, 373-381, 1979), par Schuler (DE2006894), et par Spreer et al. (Lebensmittel-biotechnologie, 7, 28-31, 1991), par exemple.

En particulier, si l'on fermente un lait par des bactéries lactiques probiotiques, on peut prévoir de fermenter en continu ce lait sous une atmosphère de gaz neutre, comme le dioxyde de carbone ou l'azote, par exemple.

De préférence, le lait fermenté soutiré en continu du premier dispositif comprend au moins 10⁶ cfu/g de bactéries lactiques (cfu provient de l'expression anglaise Colony forming Unit), notamment 10⁷ - 10⁹ cfu/g.

Ce lait fermenté peut aussi présenter un début de formation d'une synérèse qui doit être, de préférence, à peine perceptible dans la bouche d'un dégustateur. Lorsque le pH du lait fermenté est de l'ordre de 5,2, les micelles de caséine sont suffisamment instables pour commencer à s'agglomérer. Entre les pH 4,9 et 5,2, les micelles agglomérées se concentrent sans toutefois précipiter, ce qui peut alors donner un légère sensation de granulosité dans la bouche d'un dégustateur. Le pH auquel la sensation de granulosité d'un lait devient trop perceptible dépend de la composition du lait et du traitement thermique qu'il a subi. D'une manière générale, plus l'on se rapproche et l'on descend en dessous de pH 4,9, plus on court le risque de rendre le lait impropre à sa consommation.

Pour régler le pH du lait fermenté et pour renouveler convenablement la population bactérienne qui est sensible aux attaques phagiques (voir à cet effet EP748871), on peut ajouter dans le premier dispositif en continu un lait pasteurisé (non-fermenté) et des bactéries lactiques, et on peut soutirer en continu le lait fermenté du premier dispositif, par exemple. Ces bactéries lactiques peuvent être ajoutées sous la forme d'un lait pré-fermenté pouvant avoir un pH inférieur à 5 et/ou pouvant présenter au moins 10⁷ cfu/g, notamment 10⁸-10¹⁰ cfu/g, par exemple. Ces bactéries lactiques peuvent aussi être ajoutées sous la forme d'une culture séchée par lyophilisation ou par pulvérisation sous un flux d'air chaud (voir à cet effet EP96201922.0), ou sous la forme d'une culture congelée qui a été le cas échéant concentrée avant congélation (voir à cet effet EP688864)

Pour mettre en oeuvre la présente invention, dans une deuxième étape, on refroidit dans un deuxième dispositif le lait fermenté soutiré en continu du premier dispositif, à une température inférieure à 15°C, de préférence 2-10°C, de sorte à soumettre ce lait fermenté à une post-acidification, le temps de résidence de ce lait dans le deuxième dispositif étant ajusté de façon à ce qu'à la sortie de celui-ci le pH du lait fermenté soit inférieur à pH4,7.

Ce deuxième dispositif peut être ainsi constitué principalement d'au moins une tubulure réfrigérée, le lait fermenté avançant en continu dans cette tubulure au moyens de pompes appropriées, par exemple à un débit inférieur à 400 l/h, ledit lait subissant alors une post-acidification jusqu'à un pH qui peut être inférieur à 4,7 à la sortie de la tubulure. De préférence, cette mise en oeuvre particulière est appliquée pour des laits fermentés qui, à la sortie du premier dispositif, ont un pH de l'ordre de 4,9-5,1, et/ou une température proche de 15°C, par exemple 13-20°C.

Pour accélérer cette post-acidification, on peut aussi régler le pH du lait fermenté provenant en continu du premier dispositif, par adjonction continue d'une composition acide ayant une température inférieure à 15°C et un pH inférieur à 4,9, mais de préférence une température de l'ordre de 1-10°C et un pH de l'ordre de 2,5-4,7, par exemple.

Le deuxième dispositif peut être ainsi une cuve réfrigérée brassant en continu un lait fermenté, le lait fermenté soutiré du premier dispositif étant introduit en continu dans cette cuve, une composition acide étant également introduite en continu dans cette cuve de manière à accélérer la post-acidification, un lait fermenté ayant un pH inférieur à 4,7 étant finalement soutiré en continu de cette cuve.

La composition acide peut être par ailleurs un lait fermenté par des bactéries lactiques mais qui n'est pas coagulé. Pour cela, il suffit de préalablement fermenter un lait par des bactéries lactiques jusqu'à un pH inférieur à 4,9, par exemple un pH de 3,9-4,7, sans agitation mécanique de sorte à éviter la synérèse du lait, puis de prélever en continu une partie de ce lait fermenté, de le refroidir et de l'ajouter lait fermenté à l'entrée du deuxième dispositif, par exemple.

La composition acide peut être aussi une solution concentrée d'au moins un acide alimentaire, comme l'acide lactique, l'acide citrique et/ou l'acide malonique, par exemple. On utilise de préférence ces acides alimentaires pour accélérer la post-acidification des laits à base de matières végétales décrits ci-dessus.

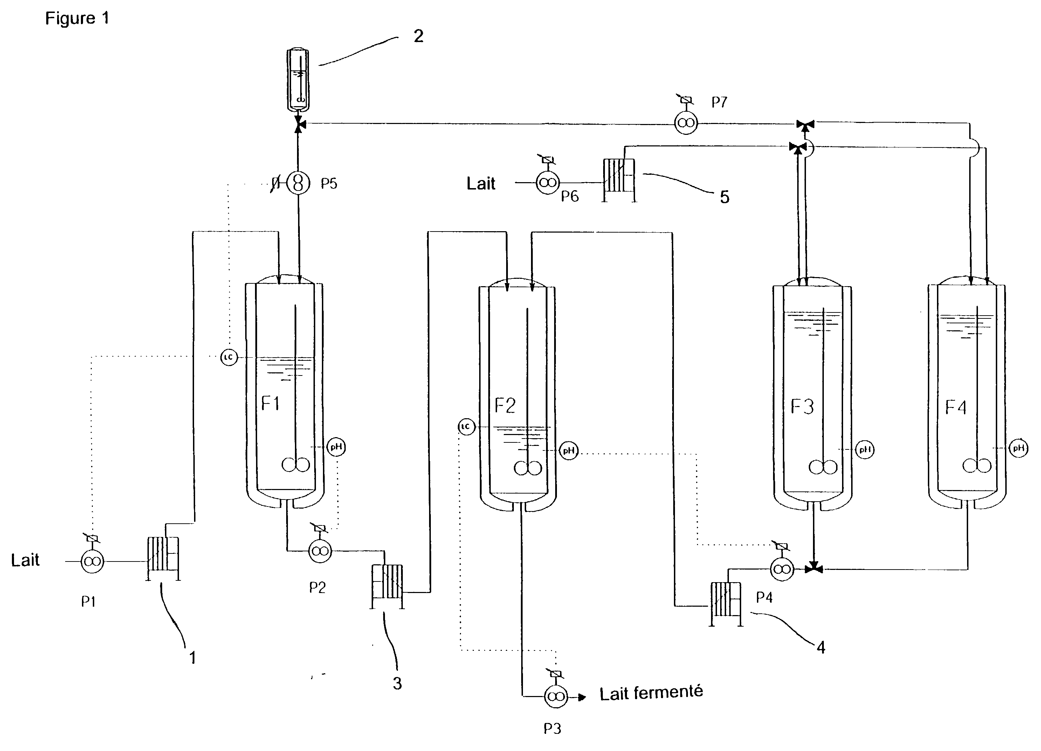

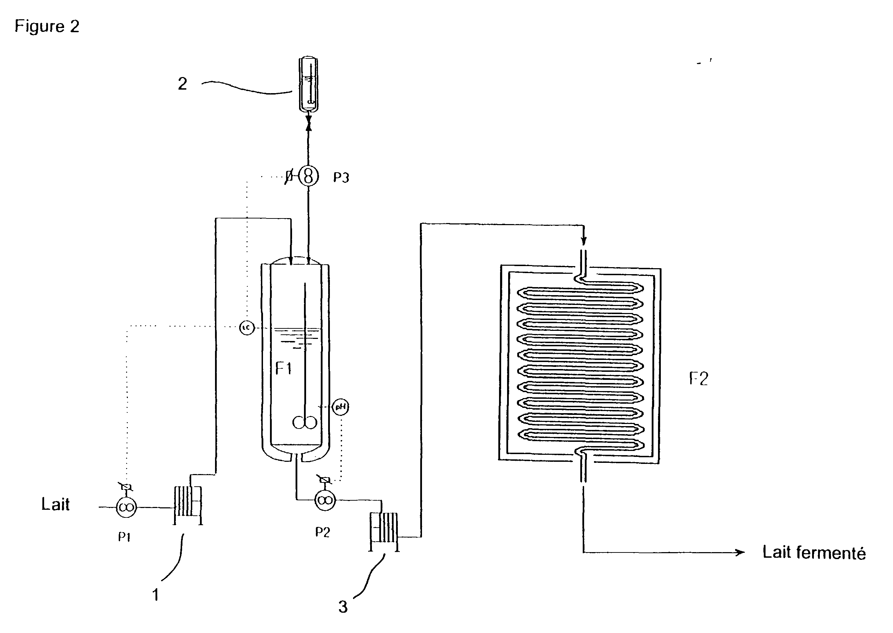

La présente invention sera mieux comprise en référence aux figures 1 et 2 représentant schématiquement des dispositifs adaptés à la mise en oeuvre de la présente invention.

La figure 1 présente 4 fermenteurs à double manteau F1 à F4, chaque fermenteur ayant une sonde de pH, les fermenteurs F1 et F2 ayant en plus une sonde de niveau de volume "LC", et les sondes de pH et de volume des fermenteurs F1 et F2 contrôlant l'ouverture de vannes P1 à P5, comme indiqué par les traits en pointillés. Lorsque ces dispositifs fonctionnent en continu, du lait pasteurisé est chauffé au moyen du radiateur 1 à la température optimale pour la croissance des bactéries. Ce lait chauffé est ensuite introduit dans le fermenteur F1 qui contient un lait fermenté présentant un pH supérieur au pH auquel une synérese perceptible se déclenche. Une petite quantité de culture starter de bactéries lactiques 2 peut être également introduite dans le fermenteur F1. On soutire du fermenteur F1 du lait fermenté, on le refroidit à une température de réfrigération au moyen d'un réfrigérateur 3, et on l'introduit dans le fermenteur F2 réfrigérée. Pour régler le pH du lait fermenté contenu dans le fermenteur F2, on introduit parallèlement dans le fermenteur F2 un deuxième lait fermenté acide refroidit au moyen du réfrigérateur 4. Ce deuxième lait provient de l'un des deux fermenteurs F3 et F4 fonctionnant en alternance. En effet, pour chaque fermenteur F3 et F4, en alternance, on les remplit de lait chauffé au moyen du chauffage 5, on inocule le lait au moyen de la culture starter 2, on incube le lait sans agitation à une température favorable à la croissance bactérienne jusqu'à un pH inférieur à pH 4,9, on brasse la culture et on la soutire pour l'introduire dans le fermenteur F2. Lorsqu'un des deux fermenteur F3 et F4 est soutiré, l'autre est alors rempli puis incubé. Finalement on soutire en continu du fermenteur F3 un lait fermenté ayant un pH inférieur ou égal à pH 4,7 et ne présentant pas une texture liée à l'apparition d'une synérèse du lait.

La figure 2 présente un fermenteur F1 à double manteau comprenant une sonde de volume "LC" et une sonde de pH, ces deux sondes contrôlant l'ouverture de vannes P1, P2 et P3, comme indiqué en pointillé. Le dispositif F2 est constitué d'une chambre réfrigérée qui est parcourue par une longue tubulure. Lorsque ces dispositifs fonctionnent en continu, du lait pasteurisé est chauffé au moyen du radiateur 1 à une température optimale pour la croissance des bactéries. Ce lait chauffé est ensuite introduit dans le fermenteur F1 qui contient un lait fermenté présentant un pH juste supérieur au pH auquel une synérese perceptible se déclenche. Une petite quantité de culture starter de bactéries lactiques 2 peut être également introduite dans le fermenteur F1. On soutire du fermenteur F1 du lait fermenté, on le refroidit à une température de réfrigération au moyen d'un réfrigérateur 3, et on l'introduit dans la tubulure à l'entrée du dispositif F2. L'invention n'est pas limitée à la présence d'une seule tubulure dans le dispositif F2. L'homme du métier est à même de choisir le nombre de tubulures nécessaires pour diviser le flux principal de lait fermentés en plusieurs petits flux, le diamètre des tubulures, leur longueur, le débit du flux principal et la température de réfrigération étant choisie pour que le lait fermenté puisse encore être post-acidifié jusqu'à un pH inférieur ou égal à 4,7. Finalement on soutire en continu du dispositif F2 un lait fermenté ayant un pH inférieur ou égal à pH 4,7 et ne présentant pas une texture liée à l'apparition d'une synérèse du lait.

La présente invention est décrite plus en détail ci-après à l'aide du complément de description qui va suivre, qui se réfère à des exemples de préparation de laits fermentés en continu. Les pourcentages et les parties sont donnés en poids sauf indication contraire. Il va de soi, toutefois, que ces exemples sont donnés à titre d'illustration de l'objet de l'invention dont ils ne constituent en aucune manière une limitation.

### Exemple 1

On produit en continu un yogourt à l'aide des dispositifs décrits à la figure 1, et à l'aide des souches *Streptococcus thermophilus* CNCM I-1292 et *Lactobacillus bulgaricus* CNCM I-1348, déposées respectivement, le 5 août 1993 et le 29 mars 1993, à l'Institut Pasteur, 25 rue du docteur Roux, 75724 Paris.

Pour cela, on prépare premièrement une culture starter de ces souches, en ensemençant un lait écrémé pasteurisé, supplémenté de 0,1% d'extrait de levure, avec 3% d'une préculture fraîche de chaque souche prise en fin de phase exponentielle de croissance, en incubant le mélange à 43°C jusqu'à pH 4,3 (environ 3,5 heures), puis en le refroidissant à 10°C.

Parallèlement, on prépare un lait comprenant 14% de matières sèches et 2,2% de graisses, on le pasteurise à 105°C pendant 2 min, on le refroidit à 70°C, on l'homogénéise à 300 bar et on le refroidit à 4°C.

Pour préparer la production en continu de yogourt, on remplit le fermenteur F3 avec 2000 l de ce lait, on l'inocule avec 3% de la culture starter, on l'incube sans brassage à 43°C jusqu'à un pH 4-4,2. Ensuite, on remplit le fermenteur F1 avec 801 de lait pasteurisé, on l'inocule avec 3% de la culture starter, et on incube le lait à 43°C en le brassant jusqu'à atteindre un pH de 5,7. Parallèlement, on remplit à moitié le fermenteur F2 de 80 l, réfrigérée à 2°C, avec le lait fermenté provenant du fermenteur F3.

On démarre la production en continue de yogourt sous les conditions suivantes: le pH dans le fermenteur F1 est réglé à 5,7 grâce à l'action contrôlée des vannes P1, P2 et P5 (addition continue de starter); le premier lait fermenté soutiré du fermenteur F1 est refroidit à 2°C à l'aide d'un réfrigérateur; le pH dans le fermenteur F2, réfrigérée à 2°C, est réglé à pH4,5 par l'addition contrôlé de lait fermenté, réfrigérée à 2°C, provenant du fermenteur F3. Pendant que l'on soutire du lait du fermenteur F3, on remplit le fermenteur F4 de lait pasteurisé, on l'ensemence et on l'incube jusqu'à ce que le lait atteigne un pH de 4-4,2 (comme pour le fermenteur F3). Lorsque le fermenteur F3 est vidé, on soutire alors le lait fermenté du fermenteur F4, et redémarre une culture dans le fermenteur F3 (utilisation des fermenteurs F3 et F4 en alternance). Les flux de matières donnés au passages de chaque vannes P1 à P7 sont en général les suivants: P1+P5=P2; P3=P1+P4+P5; P5=3% de P1; et P7=3% de P6, par exemple.

On soutire finalement en continu du fermenteur F2, à un débit de l'ordre de 450 l/h, un yogourt ayant un pH de 4,5.

### Exemple 2

De la même manière qu'à l'exemple 1, on prépare un lait acidifié à l'aide de la souche probiotique *Lactobacillus johnsonii* CNCM I-1225 décrite dans EP577904 et de la souche *Streptococcus thermophilus* CNCM I-1421, ces deux souches ayant été respectivement déposées, le 30 juin 1992 et le 18 mai 1994, à l'Institut Pasteur, 25 rue du docteur Roux, 75724 Paris, France. A la différence de l'exemple 1, on introduit une atmosphère de dioxyde de carbone dans les fermenteurs F1 et F2.

Le lait acidifié ainsi obtenu en continu présente une texture identique à celle du lait acidifié commercial LC1® "nature" (Hirtz®, Switzerland), qui est un lait fermenté préparé d'une manière traditionnelle avec la souche CNCM I-1225 et une souche *Streptococcus thermophilus.*

### Exemple 3

On produit en continu un yogourt à l'aide des dispositifs décrits à la figure 2, et à l'aide des souches *Streptococcus thermophilus* CNCM I-1292 et *Lactobacillus bulgaricus* CNCM I-1348, déposées respectivement, le 5 août 1993 et le 29 mars 1993, à l'Institut Pasteur, 25 rue du docteur Roux, 75724 Paris.

Pour cela, on prépare premièrement une culture starter de ces souches, en ensemençant un lait écrémé pasteurisé, supplémenté de 0,1% d'extrait de levure, avec 3% d'une préculture fraîche de chaque souche prise en fin de phase exponentielle de croissance, en incubant le mélange à 43°C jusqu'à pH 4,3 (environ 3,5 heures), puis en le refroidissant à 10°C.

Parallèlement, on prépare un lait comprenant 14% de matières sèches et 2,2% de graissses, on le pasteurise à 15°C pendant 2 min, on le refroidit à 70°C, on l'homogénéise à 300 bar et on le refroidit à 4°C.

Pour préparer la production en continu de yogourt, on remplit le fermenteur F1 avec 801 de lait pasteurisé, on l'inocule avec 3% de la culture starter, et on incube le lait à 43°C en le brassant jusqu'à atteindre un pH de 4,9. Puis, on démarre la production en continue de yogourt sous les conditions suivantes: le pH dans le fermenteur F1 est réglé à 4,9 grâce à l'action contrôlée des vannes P1, P2 et P3 (addition continue de starter); le lait fermenté soutiré du fermenteur F1 est refroidit à 14°C à l'aide d'un réfrigérateur; le dispositif F2 est refroidit à 15°C; la longueur, le diamètre, et le débit dans la tubulure (inférieur à 400 l/h) dans le dispositif F2sont tels que le pH du lait fermenté à la sortie du dispositif F2 est de l'ordre de pH4,7; les flux de matières calculés au passages de chaque vannes P1 à P3 sont en général les suivants: P1+P3=P2 et P5=3% de P1.

On soutire finalement en continu du fermenteur F2, un lait acidifié ayant un pH de 4,7, ledit lait fermenté présentant à peine une petite granulosité dans la bouche.

### Exemple 4

On prépare en continu un lait de soja acidifié par la souche probiotique *Lactobacillus johnsonii* CNCM I-1225 à l'aide d'un dispositif similaire à celui décrit à la figure 1.

Pour cela, on prépare un lait comprenant dans de l'eau 2,9% de farine de soja et 14,6% de saccharose. On démarre la production en continue de lait de soja fermenté comme décrit à l'exemple 1, sous les conditions suivantes: le pH dans le fermenteur F1 est réglé à 5 grâce à l'action contrôlée des vannes P1 et P2; le premier lait fermenté soutiré du fermenteur F1 est refroidit à 4°C à l'aide d'un réfrigérateur; et le pH dans le fermenteur F2, réfrigérée à 4°C, est réglé à pH 3,75 par l'addition contrôlée d'une solution à 10% d'acide lactique contenue dans la cuve F3 (pas de cuve F4).

## Revendications

1. Procédé de préparation en continue d'un lait fermenté dans lequel,
- on prépare dans un premier dispositif un lait fermenté par des bactéries lactiques, ledit lait fermenté étant soumis à des conditions de brassage et de pH telles que la synérèse du lait n'a pas lieu, et ledit pH étant réglé par adjonction continue de lait non-fermenté dans le premier dispositif et soutirage continu de lait fermenté du premier dispositif;
- dans un deuxième dispositif de post-acidification, on refroidit le lait fermenté soutiré du premier dispositif, à une température inférieure à 15°C de sorte à soumettre le lait fermenté à une post-acidification, le temps de résidence du lait fermenté dans le deuxième dispositif étant ajusté de façon à ce qu'à la sortie de celui-ci le pH du lait fermenté soit inférieur à pH4,7;
- on soutire en continu du deuxième dispositif un lait fermenté ayant un pH inférieur à pH 4,7.

2. Procédé selon la revendication 1, dans lequel on ajoute en continu des bactéries lactiques dans le premier dispositif.

3. Procédé selon la revendication 2, dans lequel on ajoute en continu des bactéries d'un lait pré-fermenté présentant un pH inférieur à 5.

4. Procédé selon la revendication 1, dans lequel, dans le deuxième dispositif, on ajuste le pH du lait fermenté par adjonction continue d'une composition acide ayant une température inférieure à 15°C et un pH inférieur à 4,9.

5. Procédé selon la revendication 4, dans lequel la composition acide est choisi parmi le groupe formé par un lait fermenté non-coagulé, et une solution d'acide lactique, d'acide citrique et d'acide malique.

6. Procédé selon l'une des revendications 1 à 5, dans lequel on prépare en continu un lait fermenté par des bactéries lactiques probiotiques capables d'adhérer aux cellules intestinales humaines, d'exclure des bactéries pathogènes sur des cellules intestinales humaines, et d'agir sur le système immunitaire humain en lui permettant de réagir plus fortement à des agressions externes.

7. Procédé selon l'une des revendications 1 à 5, dans lequel on ajoute des matières grasses au lait fermenté dans un traitement subséquent.

## Claims

1. Process for the continuous preparation of a fermented milk, wherein
- a milk fermented by lactic bacteria is prepared in a first device, the said fermented milk being subjected to fermentation and pH conditions such that syneresis of the milk does not occur, and the said pH being adjusted by the continuous addition of unfermented milk to the first device and the continuous withdrawal of fermented milk from the first device;
- the fermented milk withdrawn from the first device is cooled in a second post-acidification device to a temperature below 15°C so as to subject the fermented milk to post-acidification, the dwell time of the fermented milk in the second device being adjusted so that on leaving the latter the pH of the fermented milk is below pH 4.7;
- a fermented milk having a pH below pH 4.7 is withdrawn continuously from the second device.

2. Process according to claim 1, wherein lactic bacteria are added continuously to the first device.

3. Process according to claim 2, wherein bacteria from a pre-fermented milk having a pH below 5 are added continuously.

4. Process according to claim 1 wherein the pH of the fermented milk is adjusted in the second device by continuously adding an acid composition having a temperature below 15°C and pH below 4.9.

5. Process according to claim 4, wherein the acid composition is chosen from the group consisting of uncoagulated fermented milk and a solution of lactic acid, citric acid and malic acid.

6. Process according to one of claims 1 to 5, wherein there is prepared continuously a milk fermented with probiotic lactic bacteria capable of adhering to human intestinal cells, of excluding pathogenic bacteria from human intestinal cells, and of acting on the human immune system by enabling it to react more strongly to external attack.

7. Process according to one of claims 1 to 5, wherein fats are added to the fermented milk in a subsequent treatment.

## Patentansprüche

1. Verfahren zur kontinuierlichen Herstellung von fermentierter Milch, bei dem
- man in einer ersten Vorrichtung mittels Milchsäurebakterien fermentierte Milch herstellt, wobei die fermentierte Milch solchen Rühr- und pH-Bedingungen ausgesetzt wird, dass die Synärese der Milch nicht stattfindet, und der pH durch kontinuierliche Beigabe von nicht fermentierter Milch in die erste Vorrichtung und kontinuierliches Abziehen von fermentierter Milch aus der ersten Vorrichtung reguliert wird,
- man in einer zweiten Vorrichtung zur Nachsäuerung die aus der ersten Vorrichtung abgezogene fermentierte Milch auf eine Temperatur unter 15°C kühlt, so dass die fermentierte Milch einer Nachsäuerung unterzogen wird, wobei die Verweilzeit der fermentierten Milch in der zweiten Vorrichtung so eingestellt wird, dass der pH der fermentierten Milch am Austritt dieser Vorrichtung unter pH 4,7 liegt, und
- man aus der zweiten Vorrichtung kontinuierlich fermentierte Milch mit einem pH unter 4,7 abzieht.

2. Verfahren nach Anspruch 1, bei dem man in der ersten Vorrichtung kontinuierlich Milchsäurebakterien beigibt.

3. Verfahren nach Anspruch 2, bei dem man kontinuierlich Bakterien einer vorfermentierten Milch mit einem pH unter 5 beigibt.

4. Verfahren nach Anspruch 1, bei dem man in der zweiten Vorrichtung den pH der fermentierten Milch durch kontinuierliche Beigabe einer sauren Zusammensetzung mit einer Temperatur unter 15°C und einem pH unter 4,9 einstellt.

5. Verfahren nach Anspruch 4, bei dem die saure Zusammensetzung aus der Gruppe ausgewählt wird, die aus nicht koagulierter fermentierter Milch und einer Milchsäure-, Zitronensäure- und Äpfelsäurelösung besteht.

6. Verfahren nach einem der Ansprüche 1 bis 5, bei dem man kontinuierlich fermentierte Milch mittels probiotischer Milchsäurebakterien herstellt, die an menschlichen Darmzellen haften können, pathogene Bakterien auf menschlichen Darmzellen ausschließen können und auf das menschliche Immunsystem so einwirken können, dass es auf äußere Angriffe stärker reagiert.

7. Verfahren nach einem der Ansprüche 1 bis 5, bei dem man der fermentierten Milch in einer nachfolgenden Behandlung Fette beigibt.
